# EUROPEAN PATENT SPECIFICATION

(11) **EP 3 832 084 B1**
(45) Date of publication and mention of the grant of the patent: **21.12.2022**
(21) Application number: 19843259.3
(22) Date of filing: 21.05.2019
(51) Int. Cl.: F02M 35/10, F02M 35/108, F02M 35/16, F02M 57/04, F02M 69/04, F02B 27/02, F02B 61/02, F02D 9/02

(54) **INTERNAL COMBUSTION ENGINE**
BRENNKRAFTMASCHINE
MOTEUR À COMBUSTION INTERNE

(30) Priority: 02.08.2018 JP 2018145895
(43) Date of publication of application: 09.06.2021
(73) Proprietor: Yamaha Hatsudoki Kabushiki Kaisha, Iwata-shi, Shizuoka 438-8501 (JP)
(72) Inventor: YOSHIDA Takumori, Iwata-shi Shizuoka 438-8501 (JP); FUKUMOTO Ryosuke, Iwata-shi Shizuoka 438-8501 (JP); HIRANO Atsushi, Iwata-shi Shizuoka 438-8501 (JP)
(74) Representative: Grünecker Patent- und Rechtsanwälte PartG mbB
(86) International application number: PCT/JP2019/020134
(87) International publication number: WO 2020/026565

(56) References cited:
- EP-A1- 2 112 354
- JP-A- H 045 430
- JP-A- S 614 821
- JP-A- S6 296 724
- JP-A- H01 318 756
- JP-A- 2002 256 873
- JP-A- 2002 256 873
- JP-A- 2004 100 458
- JP-U- H0 166 431
- JP-U- H0 250 128
- JP-U- H0 383 329
- KR-A- 20060 031 217
- US-A- 4 660 530

## Description

The present invention relates to an internal combustion engine according to the preamble of independent claim 1.

An internal combustion engine is preferably capable of exerting a large torque in a wide range from a low-speed region to a high-speed region. JP2009-162080A, for example, describes a known internal combustion engine in which the length of a funnel of an intake passage is changeable. This internal combustion engine includes a fixed funnel connected to a throttle body, a movable funnel movable relative to the fixed funnel, and an actuator that moves the movable funnel. When the actuator moves the movable funnel, the movable funnel comes to be connected to the fixed funnel or disconnected from the fixed funnel. In this manner, the entire length of the funnel can be changed so that an engine torque can be increased in both a low-speed region and a high-speed region.

The internal combustion engine described above needs a mechanism for moving the movable funnel toward and away from the fixed funnel. That is, a mechanism for changing the length of the funnel is needed. Such a mechanism, however, has a complicated structure, and can increase costs for the internal combustion engine.

US 4660530A, JP H01 318756A and JP S62 96724A disclose alternative solutions comprising first and second intake passages connected to a throttle body, wherein the second intake passage comprises a shut-off valve configured to open the second intake passage in a high-speed region and close the second intake passage in a low-speed region.

The present invention has been made in view of the foregoing, and has an object of providing an internal combustion engine capable of increasing an engine torque in both a low-speed region and a high-speed region with a relatively simple and low-cost configuration. According to the present invention said object is solved by an internal combustion engine having the features of independent claim 1. Preferred embodiments are laid down in the dependent claims.

An internal combustion engine according to the present invention includes an intake passage, a throttle valve, a partition, and a shut-off valve. The intake passage has an inlet and an intake opening, and extends from the inlet to the intake opening. The inlet is configured to introduce air, and the intake opening is open to a combustion chamber. The throttle valve includes a rotatable valve shaft and a valve body disposed on the valve shaft, and is disposed in the intake passage. The partition is disposed upstream of the throttle valve of the intake passage, and partitions at least a portion of the intake passage upstream of the throttle valve into a first passage and a second passage that are parallel to each other. The shut-off valve is disposed in the second passage, and opens and closes the second passage. The channel length of the first passage is larger than the channel length between a downstream end of the partition of the intake passage and the valve shaft of the throttle valve. The "channel length" refers to the length of a center line of a channel, and in a case where the center line of the channel is a curve, the channel length is the length of this curve. The "channel length to the valve shaft of the throttle valve" refers to a channel length to the center of the valve shaft of the throttle valve.

In the internal combustion engine, a channel cross-sectional area of a portion of the intake passage upstream of the throttle valve (hereinafter simply referred to as an upstream intake passage) is changed by opening and closing the shut-off valve. When the shut-off valve is closed, the channel cross-sectional area of the upstream intake passage is reduced. Accordingly, a torque in a low-speed region of the internal combustion engine is increased. On the other hand, when the shut-off valve is opened, the channel cross-sectional area of the upstream intake passage is increased. Accordingly, a torque in a high-speed region of the internal combustion engine is increased. In this manner, an engine torque can be increased in both the low-speed region and the high-speed region.

The internal combustion engine does not need a mechanism for changing the length of a funnel, and an engine torque can be increased in the low-speed region and the high-speed region only by opening and closing the shut-off valve. Thus, an engine torque can be increased in both the low-speed region and the high-speed region with a relatively simple and low-cost configuration.

In the internal combustion engine, the channel length of the first passage is larger than the channel length between a downstream end of the partition and the valve shaft of the throttle valve. The first passage has a relatively large channel length, and a channel length between the partition and the throttle valve is relatively small. Thus, the effect of changing the channel cross-sectional area of the intake passage with opening/closing of the shut-off valve increases. As a result, the engine torque can be increased in a wider speed range.

In the internal combustion engine, the throttle valve is disposed downstream of the first passage and the second passage. Thus, the internal combustion engine returns a quick response to control of the throttle valve. In addition, as compared to a case where the throttle valve is disposed upstream of the first passage and the second passage, a portion of the intake passage downstream of the throttle valve has a small volume. Thus, it is easily to achieve stabile combustion under a low load (i.e., in a region where a throttle opening degree is small).

In one preferred aspect of the present invention, the second passage has a channel length larger than a channel length between the downstream end of the partition of the intake passage and the valve shaft of the throttle valve.

In this aspect, the channel length of the second passage is relatively large, and a channel length between the partition and the throttle valve is relatively small. Thus, the effect of changing the channel cross-sectional area of the intake passage with opening/closing of the shut-off valve increases. As a result, the engine torque can be increased in a wider speed range.

In one preferred aspect of the present invention, a total channel length of the first passage and the second passage is larger than a channel length of a portion of the intake passage except for the first passage and the second passage.

In this aspect, the channel lengths of the first passage and the second passage are relatively large, and thus, the effect of changing the channel cross-sectional area of the intake passage with opening/closing of the shut-off valve increases. As a result, the engine torque can be increased in a wider speed range.

In one preferred aspect of the present invention, the channel length of the first passage and the channel length of the second passage are equal.

In this aspect, the first passage and the second passage parallel to each other can be easily formed.

In one preferred aspect of the present invention, the channel length of the first passage is greater than or equal to 0.3 times as large as the channel length between the downstream end of the partition of the intake passage and the intake opening.

In this aspect, since the channel length of the first passage is relatively large, the effect of changing the channel cross-sectional area of the intake passage with opening/closing of the shut-off valve increases. As a result, the engine torque can be increased in a wider speed range.

According to the invention, the internal combustion engine further includes : an air cleaner; an intake pipe having the inlet and connected to the air cleaner; a throttle body housing the throttle valve and connected to the intake pipe; and a cylinder head having the intake opening and an intake port located upstream of the intake opening, the throttle body being attached to the cylinder head. The intake passage includes the intake port, the throttle body, and the intake pipe, and at least a portion of the partition is disposed inside the intake pipe.

In one preferred aspect of the present invention, the channel length of the first passage is larger than the channel length of the throttle body.

In this aspect, since the channel length of the first passage is relatively large, the effect of changing the channel cross-sectional area of the intake passage with opening/closing of the shut-off valve increases. As a result, the engine torque can be increased in a wider speed range.

In one preferred aspect of the present invention, the channel length between the downstream end of the partition of the intake passage and the valve shaft of the throttle valve is one to three times as large as an inner diameter of the throttle body.

If the length between the downstream end of the partition and the valve shaft of the throttle valve is excessively small, when the shut-off valve is closed, air that has flowed through the first passage tends to flow nonuniformly with respect to the throttle valve. On the other hand, in this aspect, the channel length between the downstream end of the partition and the valve shaft is greater than or equal to the channel length of the throttle body. Thus, it is possible to prevent air from flowing nonuniformly with respect to the throttle valve when the shut-off valve is closed. As a result, it is possible to control power of the internal combustion engine favorably with the throttle valve. On the other hand, if the length between the downstream end of the partition and the valve shaft is excessively large, the effect of changing the channel cross-sectional area of the intake passage with opening/closing of the shut-off valve tends to decrease. On the other hand, in this aspect, the channel length between the downstream end of the partition and the valve shaft is greater than or equal to three times as large as the channel length of the throttle body. Thus, the effect of changing the channel cross-sectional area of the intake passage with opening/closing of the shut-off valve can be sufficiently obtained.

According to the present invention, the internal combustion engine further includes an injector having an injection port from which fuel is injected, and the injector is attached to the throttle body. The injection port is located at an opposite side to a center line of the second passage with respect to a center line of the throttle body when seen from a downstream side of the throttle body.

Air flows in the first passage in either of the cases where the shut-off valve is closed and where the shut-off valve is open. In this aspect, the injection port of the injector is disposed closer to the first passage than to the second passage. The injection port is always disposed toward a portion in which air flows. Thus, in either of the cases where the shut-off valve is closed and where the shut-off valve is open, diffusion of fuel injected from the injector can be promoted with the air. In addition, adhesion of the fuel to walls can be suppressed with the air.

In one preferred aspect of the present invention, a downstream end of the partition is located outside the throttle body.

In this aspect, since the partition is disposed outside the throttle body, the partition can be easily formed.

In one preferred aspect of the present invention, the downstream end of the partition is located inside the throttle body.

In this aspect, since the downstream end of the partition is located inside the throttle body, the channel length between the downstream end of the partition and the throttle valve is reduced. Thus, the effect of changing the channel cross-sectional area of the intake passage with opening/closing of the shut-off valve increases.

In one preferred aspect of the present invention, the intake pipe includes an outer pipe and an inner pipe disposed inside the outer pipe. The partition is constituted by at least a portion of the inner pipe. The first passage is disposed inside the outer pipe and outside the inner pipe. The second passage is disposed inside the inner pipe.

In this aspect, the first passage and the second passage can be easily formed.

Each of the outer pipe and the inner pipe may be a circular pipe.

The internal combustion engine may further include: a rotation speed sensor configured to detect a rotation speed of the internal combustion engine; and a controller configured to close the shut-off valve if the rotation speed detected by the rotation speed sensor is less than a threshold and to open the shut-off valve if the rotation speed is greater than or equal to the threshold.

The internal combustion engine may further include: a rotation speed sensor configured to detect a rotation speed of the internal combustion engine; and a load detector configured to detect a load of the internal combustion engine; and a controller configured to close the shut-off valve if the rotation speed detected by the rotation speed sensor is less than a threshold and to open the shut-off valve if the rotation speed is greater than or equal to the threshold, the controller being configured to change a setting of the threshold based on the load detected by the load detector.

### ADVANTAGES OF THE INVENTION

The present invention provides an internal combustion engine capable of enhancing an engine torque in both a low-speed region and a high-speed region with a relatively simple and low-cost configuration.

### BRIEF DESCRIPTION OF THE DRAWINGS

[FIG. 1] A partial side view of a motorcycle including an internal combustion engine according to one preferred embodiment.
[FIG. 2] A partial cross-sectional view of the internal combustion engine.
[FIG. 3] A partial cross-sectional view of the internal combustion engine.
[FIG. 4] A cross-sectional view taken along line IV-IV in FIG. 3.
[FIG. 5] A view of a throttle body when seen from a downstream side.
[FIG. 6] A partial cross-sectional view of the internal combustion engine.
[FIG. 7] A block diagram of a control system of a shut-off valve.
[FIG. 8A] A torque curve graph showing a relationship between an engine rotation speed and an engine torque.
[FIG. 8B] A torque curve graph showing a relationship between an engine rotation speed and an engine torque with different loads.
[FIG. 9] A partial cross-sectional view of an internal combustion engine according to another preferred embodiment.
[FIG. 10] A partial cross-sectional view of an internal combustion engine according to another preferred embodiment.
[FIG. 11] A partial cross-sectional view of an internal combustion engine according to another preferred embodiment.

### DETAILED DESCRIPTION OF THE PREFERRED EMBODIMENTS

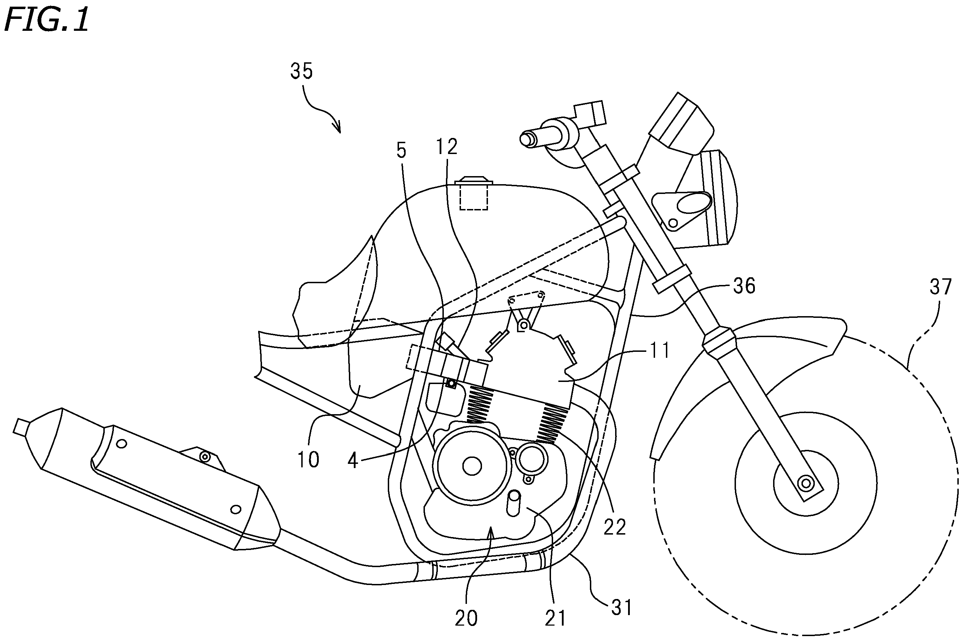

A preferred embodiment of the present invention will be hereinafter described. An internal combustion engine according to this preferred embodiment is to be mounted on a vehicle and used as a driving source for traveling. The vehicle is not limited to a specific type, and as illustrated in FIG. 1, the vehicle according to this preferred embodiment is a motorcycle 35.

The motorcycle 35 includes a body frame 36, an internal combustion engine 20 supported by the body frame 36, a front wheel 37, and an unillustrated rear wheel. The rear wheel is a so-called driving wheel and is connected to the internal combustion engine 20 by an unillustrated power transmission mechanism. The internal combustion engine 20 is configured to output power to the rear wheel.

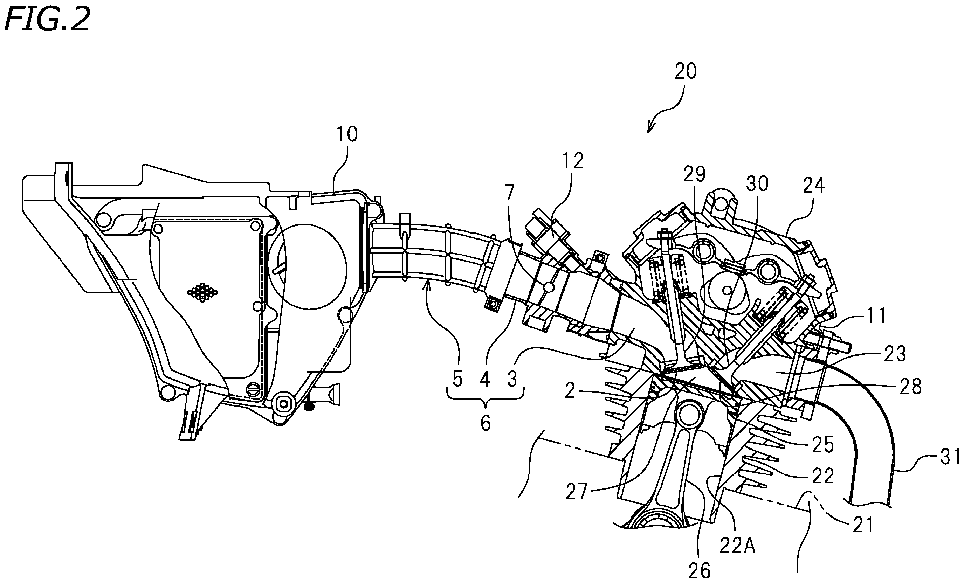

As illustrated in FIG. 2, the internal combustion engine (hereinafter referred to simply as an engine) 20 includes a crankcase 21, a cylinder body 22, a cylinder head 11, and a cylinder head cover 24. A cylinder 22A is formed inside the cylinder body 22. A piston 25 is disposed inside the cylinder 22A. An unillustrated crankshaft is disposed in the crankcase 21. The crankshaft and the piston 25 are connected to each other by a connecting rod 26.

The cylinder head 11 has an intake port 3 and an exhaust port 23. The intake port 3 has an intake opening 2 that is open to a combustion chamber 27. The exhaust port 23 has an exhaust opening 28 that is open to the combustion chamber 27. The cylinder head 11 includes an intake valve 29 that opens and closes the intake opening 2, and an exhaust valve 30 that opens and closes the exhaust opening 28. An exhaust pipe 31 is connected to the exhaust port 23.

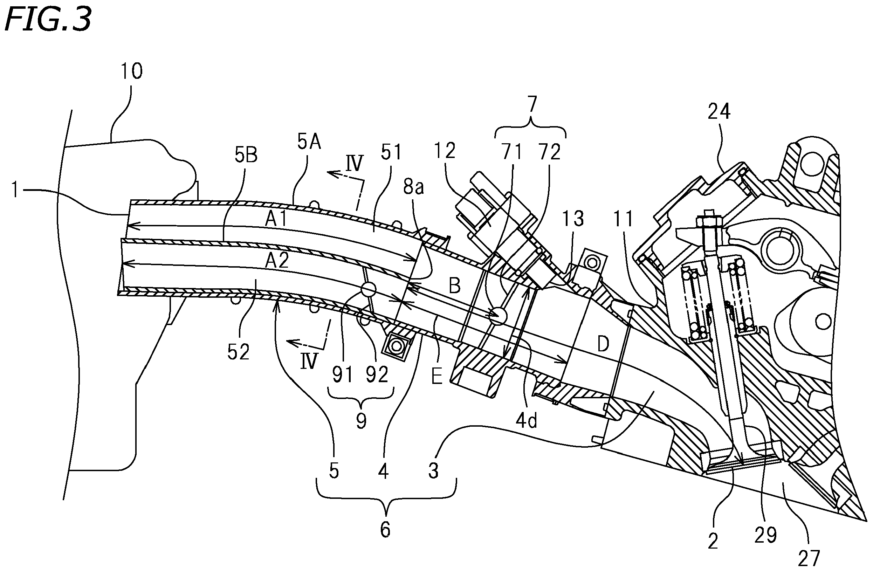

The engine 20 includes an air cleaner 10 and an intake passage 6. The intake passage 6 is constituted by the intake port 3, a throttle body 4, and an intake pipe 5. The throttle body 4 is connected to the cylinder head 11. The intake pipe 5 is connected to the throttle body 4. The air cleaner 10 is connected to the intake pipe 5. As illustrated in FIG. 3, the intake pipe 5 has an inlet 1 that is open inside the air cleaner 10. The intake passage 6 includes the inlet 1 that introduces air, and the intake opening 2 that is open to the combustion chamber 27. The intake passage 6 extends from the inlet 1 to the intake opening 2.

A throttle valve 7 is disposed inside the throttle body 4. The throttle valve 7 includes a valve shaft 71 rotatably supported by the throttle body 4, and a valve body 72 disposed on the valve shaft 71.

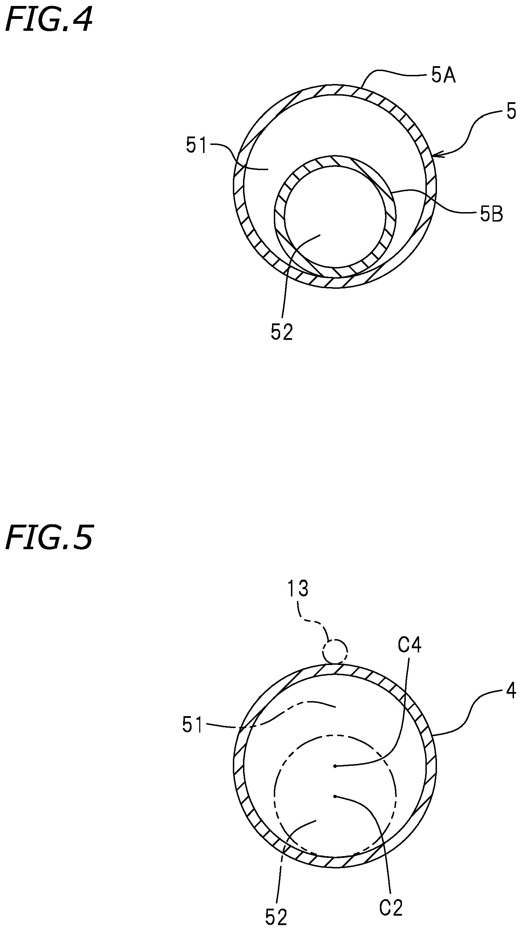

As illustrated in FIG. 4, the intake pipe 5 is constituted by a double pipe. The intake pipe 5 includes an outer pipe 5A, and an inner pipe 5B disposed inside the outer pipe 5A. In this preferred embodiment, each of the outer pipe 5A and the inner pipe 5B is a circular pipe. The cross-sectional shapes of the outer pipe 5A and the inner pipe 5B are not specifically limited.

A first passage 51 is disposed inside the outer pipe 5A and outside the inner pipe 5B. A second passage 52 is formed inside the inner pipe 5B. The first passage 51 and the second passage 52 are disposed in parallel. In this preferred embodiment, the first passage 51 and the second passage 52 are parallel to each other. The inner pipe 5B serves as a partition that separates the first passage 51 and the second passage 52 from each other.

As illustrated in FIG. 3, a shut-off valve 9 is disposed in the second passage 52. The shut-off valve 9 is disposed inside the inner pipe 5B. The shut-off valve 9 is not limited to a specific configuration, and in this preferred embodiment, is constituted by a butterfly valve including a valve shaft 91 and a valve body 92 disposed on the valve shaft 91. The shut-off valve 9 is rotatably supported by at least the inner pipe 5B.

In the intake passage 6, air flows from the inlet 1 toward the intake opening 2. In this specification, a side from which air flows will be referred to as an upstream side, and a side to which air flows will be hereinafter referred to as a downstream side. In this preferred embodiment, a side close to the inlet 1 is an upstream side, and a side close to the intake opening 2 is a downstream side. The inner pipe 5B is disposed upstream of the throttle valve 7. A downstream end of the inner pipe 5B corresponds to a downstream end 8a of the partition that separates the first passage 51 and the second passage 52 from each other. Since the inner pipe 5B is disposed outside the throttle body 4, the downstream end 8a of the partition is located outside the throttle body 4 in this preferred embodiment.

In this preferred embodiment, a channel length A1 of the first passage 51 and a channel length A2 of the second passage 52 are relatively large. The channel length refers to a length along a center line of the passage. In this preferred embodiment, each of the channel length A1 of the first passage 51 and the channel length A2 of the second passage 52 are larger than a channel length B between the downstream end 8a of the inner pipe 5B and the valve shaft 71 of the throttle valve 7. That is, A1 > B and A2 > B. The channel length between the downstream end 8a of the inner pipe 5B and the valve shaft 71 refers to a channel length between the downstream end 8a of the inner pipe 5B and a center of the valve shaft 71.

The channel length A1 of the first passage 51 is larger than a channel length E of the throttle body 4. That is, A1>E. The channel length A2 of the second passage 52 is larger than the channel length E of the throttle body 4. That is, A2 > E.

In this preferred embodiment, the channel length A1 of the first passage 51 is equal to the channel length A2 of the second passage 52. That is, A1 = A2. However, these relationships are not restrictive.

A total channel length A1+A2 of the first passage 51 and the second passage 52 is larger than a channel length D of a portion of the intake passage 6 except for the first passage 51 and the second passage 52. That is, A1 + A2 > D.

The channel length A1 of the first passage 51 is equal to or greater than 0.3 times as larger as the channel length D between the downstream end 8a of the inner pipe 5B of the intake passage 6 and the intake opening 2. That is, A1 ≥ 0.3D.

In this preferred embodiment, the channel length B between the downstream end 8a of the inner pipe 5B and the valve shaft 71 of the throttle valve 7 is one to three times as large as an inner diameter 4d of the throttle body 4. However, these relationships are not restrictive.

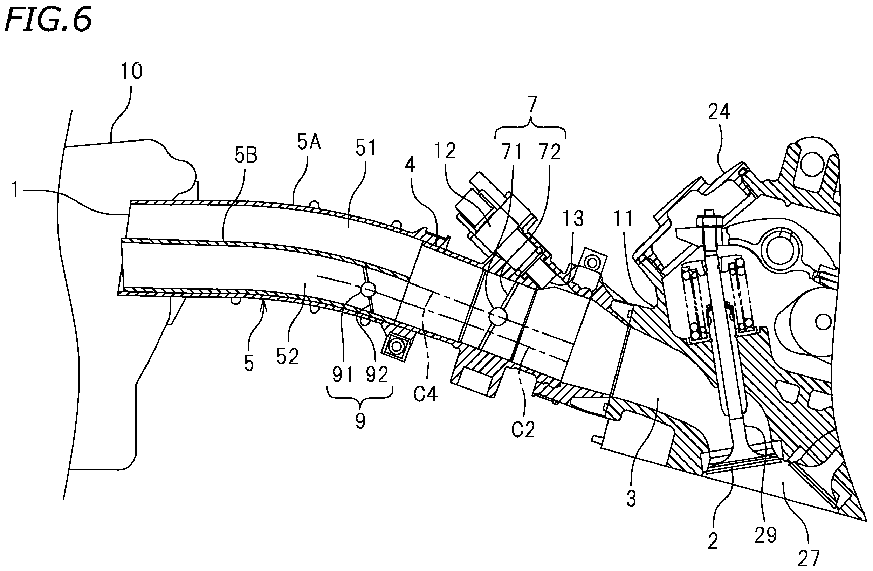

As illustrated in FIG. 3, an injector 12 is attached to the throttle body 4. The injector 12 has an injection port 13 from which fuel is injected. As illustrated in FIG. 5, when seen from the downstream side of the throttle body 4 (from the right in FIG. 3), the injection port 13 is located at an opposite side to a center line C2 of the second passage 52 with respect to a center line C4 of the throttle body 4. As illustrated in FIG. 6, the injection port 13 is located above the center line C4 of the throttle body 4, and the center line C2 of the second passage 52 is located below the center line C4 of the throttle body 4.

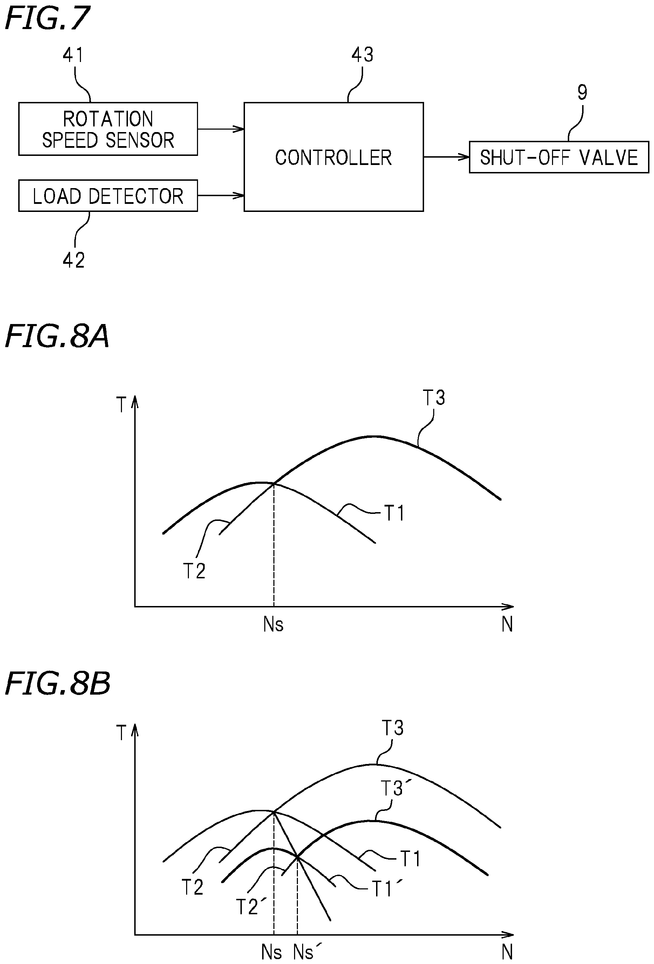

As shown in FIG. 7, the engine 20 includes a rotation speed sensor 41 that detects a rotation speed of the engine 20, a load detector 42 that detects a load of the engine 20, and a controller 43 constituted by an electronic control unit (ECU). The rotation speed of the engine 20 is a rotation speed of the crankshaft (not shown). The controller 43 is configured to control the shut-off valve 9 based on a rotation speed detected by the rotation speed sensor 41, or based on a rotation speed detected by the rotation speed sensor 41 and a load detected by the load detector 42.

For example, the controller 43 may be configured to close the shut-off valve 9 if the rotation speed detected by the rotation speed sensor 41 is less than a threshold, and to open the shut-off valve 9 if this rotation speed is greater than or equal to the threshold.

FIG. 8A is a graph of a torque curve of the engine 20, and shows a relationship between a rotation speed N and an output torque (hereinafter referred to as an engine torque) T of the engine 20 in a case where the opening degree of the throttle valve 7 is constant (e.g., the opening degree of the throttle valve 7 is a maximum opening degree). When the shut-off valve 9 is closed, air flows in the first passage 51, but does not flow in the second passage 52. When the shut-off valve 9 is closed, the channel cross-sectional area of the intake pipe 5 decreases, and thus, the torque curve of the engine 20 becomes a curve T1. In the torque curve T1, the engine torque T is large in a region where the engine rotation speed N is relatively low, that is, in a low-speed region. On the other hand, when the shut-off valve 9 is opened, air flows in both the first passage 51 and the second passage 52. When the shut-off valve 9 is opened, the channel cross-sectional area of the intake pipe 5 increases, and thus, the torque curve of the engine 20 becomes a curve T2. In the torque curve T2, the engine torque T is large in a region where the engine rotation speed N is relatively high, that is, in a high-speed region. In this preferred embodiment, the controller 43 closes the shut-off valve 9 if the rotation speed N is less than a threshold Ns, and opens the shut-off valve 9 if the rotation speed N is greater than or equal to the threshold Ns. As a result, the torque curve T3 of the engine 20 becomes a curve as formed by connecting higher one of the torque curves T1 and T2, can increase the engine torque T in both the low-speed region and the high-speed region.

In the engine 20, the opening degree of the throttle valve 7 is changed in accordance with a load, whereas the torque curve of the engine 20 changes in accordance with the opening degree of the throttle valve 7. As shown in FIG. 8B, for example, in a case where the opening degree of the throttle valve 7 is lower than that in the above example, the torque curve when the shut-off valve 9 is closed changes from T1 to T1', and the torque curve when the shut-off valve 9 is opened changes from T2 to T2'. Consequently, a curve as formed by connecting higher one of the torque curves T1' and T2' is T3', and the rotation speed N at a point of intersection of the two torque curves T1' and T2' is from Ns to Ns'. In view of this, in this case, the threshold as a base for opening and closing of the shut-off valve 9 is preferably changed from Ns to Ns'.

Thus, the controller 43 may be configured to change the threshold as a base for opening and closing of the shut-off valve 9 in accordance with a load of the engine 20. That is, the controller 43 may be configured to close the shut-off valve 9 if the rotation speed detected by the rotation speed sensor 41 is less than the threshold, to open the shut-off valve 9 if this rotation speed is greater than or equal to the threshold, and to change the setting of the threshold in accordance with the load detected by the load detector 42. In this preferred embodiment, as the load of the engine 20 decreases, the threshold is set at a larger value. The control method of the controller 43 is not specifically limited, and the controller 43 may be configured to control opening and closing of the shut-off valve 9 with reference to a map previously determined by using a rotation speed and a load.

As described above, in the engine 20 according to this preferred embodiment, as illustrated in FIG. 3, the first passage 51 and the second passage 52 are disposed upstream of the throttle valve 7, and the shut-off valve 9 is disposed inside the second passage 52. The channel cross-sectional area of a portion of the intake passage 6 upstream of the throttle valve 7 (upstream intake passage) can be changed by opening and closing the shut-off valve 9. Specifically, the channel cross-sectional area of the upstream intake passage is reduced by closing the shut-off valve 9, and the channel cross-sectional area of the upstream intake passage is increased by opening the shut-off valve 9. Thus, an engine torque in a low-speed region is increased by closing the shut-off valve 9, and an engine torque in a high-speed region is increased by opening the shut-off valve 9 (see FIGS. 8A and 8B). As a result, in the engine 20 according to this preferred embodiment, an engine torque can be increased in both the low-speed region and the high-speed region.

The engine 20 according to this preferred embodiment does not need a mechanism for changing the length of the intake passage 6. The engine torque in the low-speed region and the high-speed region can be increased only by opening and closing the shut-off valve 9. Thus, the engine torque can be increased in both the low-speed region and the high-speed region with a relatively simple and low-cost configuration.

In the engine 20 according to this preferred embodiment, the channel length A1 of the first passage 51 is larger than the channel length B between the downstream end 8a of the inner pipe 5B as a partition and the valve shaft 71 of the throttle valve 7. That is, the channel length A1 of the first passage 51 is larger than the channel length B between the downstream end of the first passage 51 and the valve shaft 71 of the throttle valve 7. As described above, since the channel length A1 of the first passage 51 is relatively large, and the channel length B between the first passage 51 and the throttle valve 7 is relatively small, the effect of changing the channel cross-sectional area of the intake passage 6 with opening/closing of the shut-off valve 9 increases. Accordingly, the engine torque can be increased in a wider speed range (see FIGS. 8A and 8B).

In the engine 20 according to this preferred embodiment, the throttle valve 7 is disposed downstream of the first passage 51 and the second passage 52. Thus, as compared to a case where the throttle valve 7 is disposed upstream of the first passage 51 and the second passage 52, the engine 20 returns a quick response to control of the throttle valve 7. That is, when the opening degree of the throttle valve 7 is changed, power of the engine 20 quickly changes. In addition, since the throttle valve 7 is disposed downstream of the first passage 51 and the second passage 52, the volume of a portion of the intake passage 6 downstream of the throttle valve 7 (downstream intake passage) is smaller than that in a case where the throttle valve 7 is disposed upstream of the first passage 51 and the second passage 52. Thus, stabile combustion can be easily achieved with a low load (i.e., in a region where the opening degree of the throttle valve 7 is small).

In the engine 20 according to this preferred embodiment, the channel length A2 of the second passage 52 is larger than the channel length B between the downstream end 8a of the inner pipe 5B and the valve shaft 71 of the throttle valve 7. The channel length A2 of the second passage 52 is larger than the channel length B between the downstream end of the second passage 52 and the valve shaft 71 of the throttle valve 7. As described above, since the channel length A2 of the second passage 52 is relatively large and the channel length B between the second passage 52 and the throttle valve 7 is relatively small, the effect of changing the channel cross-sectional area of the intake passage 6 with opening/closing of the shut-off valve 9 increases. As a result, the engine torque can be increased in a wider speed range.

In the engine 20 according to this preferred embodiment, the total channel length A1+A2 of the first passage 51 and the second passage 52 is larger than the channel length D of the portion of the intake passage 6 except for the first passage 51 and the second passage 52. As described above, since the channel length A1 of the first passage 51 and the channel length A2 of the second passage 52 are relatively large, the effect of changing the channel cross-sectional area of the intake passage 6 with opening/closing of the shut-off valve 9 increases. As a result, the engine torque can be increased in a wider speed range.

The channel length A1 of the first passage 51 and the channel length A2 of the second passage 52 may be different, but are the same in this preferred embodiment. Thus, the first passage 51 and the second passage 52, which are parallel to each other, can be easily formed by simply arranging a partition (the inner pipe 5B in this preferred embodiment) inside the intake passage 6.

The channel length A1 of the first passage 51 is not specifically limited, and in this preferred embodiment, is set greater than or equal to 0.3 times as large as the channel length D between the downstream end 8a of the inner pipe 5B and the intake opening 2. The channel length A1 of the first passage 51 is larger than the channel length E of the throttle body 4. As described above, since the channel length A1 of the first passage 51 is relatively large, the effect of changing the channel cross-sectional area of the intake passage 6 with opening/closing of the shut-off valve 9 increases. As a result, the engine torque can be increased in a wider speed range.

If the length B between the downstream end 8a of the inner pipe 5B and the valve shaft 71 of the throttle valve 7 is excessively small, when the shut-off valve 9 is closed, air that has flowed through the first passage 51 tends to flow nonuniformly with respect to the throttle valve 7. In this preferred embodiment, when the shut-off valve 9 is closed, air tends to flow nonuniformly in an upper portion of the throttle valve 7 (see FIG. 3). On the other hand, in the engine 20 according to this preferred embodiment, the channel length B between the downstream end 8a of the inner pipe 5B and the valve shaft 71 is greater than or equal to the inner diameter 4d of the throttle body 4. Since the channel length B is kept, it is possible to prevent air from flowing nonuniformly with respect to the throttle valve 7 when the shut-off valve 9 is closed. As a result, it is possible to control power of the engine 20 favorably by controlling the throttle valve 7. On the other hand, if the channel length B between the downstream end 8a of the inner pipe 5B and the valve shaft 71 is excessively large, the effect of changing the channel cross-sectional area of the intake passage 6 with opening/closing of the shut-off valve 9 tends to decrease. In the engine 20 according to this preferred embodiment, however, the channel length B between the downstream end 8a of the inner pipe 5B and the valve shaft 71 is less than or equal to three times as large as the inner diameter 4d of the throttle body 4. Since the channel length B is kept small, the effect of changing the channel cross-sectional area of the intake passage 6 with opening/closing of the shut-off valve 9 can be sufficiently obtained.

In the engine 20 according to this preferred embodiment, while the shut-off valve 9 is closed, air flows only through the first passage 51 in the first passage 51 and the second passage 52. While the shut-off valve 9 is open, air flows in both the first passage 51 and the second passage 52. As described above, air flows in the first passage 51 in either of the cases where the shut-off valve 9 is closed and where the shut-off valve 9 is open. In this preferred embodiment, as illustrated in FIGS. 5 and 6, when seen from the downstream side of the throttle body 4, the injection port 13 of the injector 12 is located at the opposite side to the center line C2 of the second passage 52 with respect to the center line C4 of the throttle body 4. The injection port 13 of the injector 12 is located closer to the first passage 51 than to the second passage 52. That is, the injection port 13 is disposed in a portion where air always flows. Thus, in either of the cases where the shut-off valve 9 is closed and where the shut-off valve 9 is open, diffusion of fuel injected from the injector 12 can be promoted with the air. In addition, adhesion of the fuel to walls can be suppressed with the air.

In the engine 20 according to this preferred embodiment, the outer pipe 5A and the inner pipe 5B disposed inside the outer pipe 5A form the first passage 51 and the second passage 52. Thus, the first passage 51 and the second passage 52 can be easily formed. The inner pipe 5B serving as the partition is disposed outside the throttle body 4. Thus, a partition separating the first passage 51 and the second passage 52 from each other can be easily formed. The intake pipe 5 and the throttle body 4 can be easily assembled.

Although one preferred embodiment of the present invention has been described above, the preferred embodiment is merely an example. Various other embodiments may be employed. Next, other preferred embodiments will be briefly described.

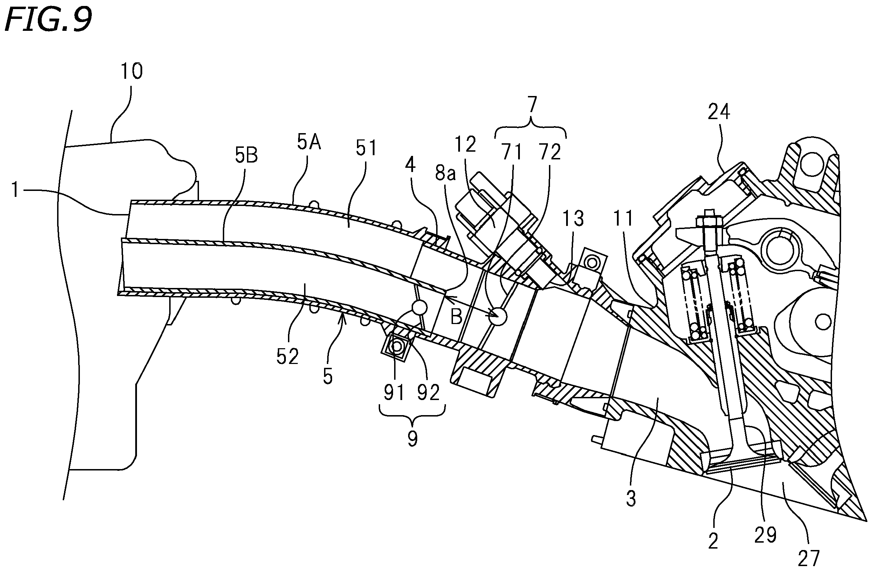

In the preferred embodiment, the downstream end 8a of the inner pipe 5B serving as a partition is disposed outside the throttle body 4. Alternatively, as illustrated in FIG. 9, the downstream end 8a of the partition may be disposed inside the throttle body 4. For example, the inner pipe 5B may be disposed across the inside of the outer pipe 5A and the inside of the throttle body 4. In this case where the downstream end 8a of the partition is disposed inside the throttle body 4, the channel length B between the downstream end 8a of the partition and the throttle valve 7 can be further reduced. Thus, the effect of changing the channel cross-sectional area of the intake passage 6 with opening/closing of the shut-off valve 9 further increases. As a result, the engine torque can be increased in a wider speed range.

In the preferred embodiment, the shut-off valve 9 is disposed outside the throttle body 4. The shut-off valve 9 is disposed upstream of the throttle body 4. However, the shut-off valve 9 is not limited to a specific position. As illustrated in FIG. 9, the shut-off valve 9 may be disposed inside the throttle body 4.

In the preferred embodiment, each of the outer pipe 5A and the inner pipe 5B is a circular pipe. Alternatively, one or both of the outer pipe 5A and the inner pipe 5B may not be the circular pipe. For example, the outer pipe 5A and the inner pipe 5B may be a rectangular pipe.

In the preferred embodiment, the intake pipe 5 includes the outer pipe 5A and the inner pipe 5B, and the partition separating the first passage 51 and the second passage 52 from each other is formed of the inner pipe 5B. However, the configuration of the intake pipe 5 including the first passage 51 and the second passage 52 is not specifically limited. For example, a partition of a flat plate, a curved plate, or a bent plate may be disposed inside one pipe.

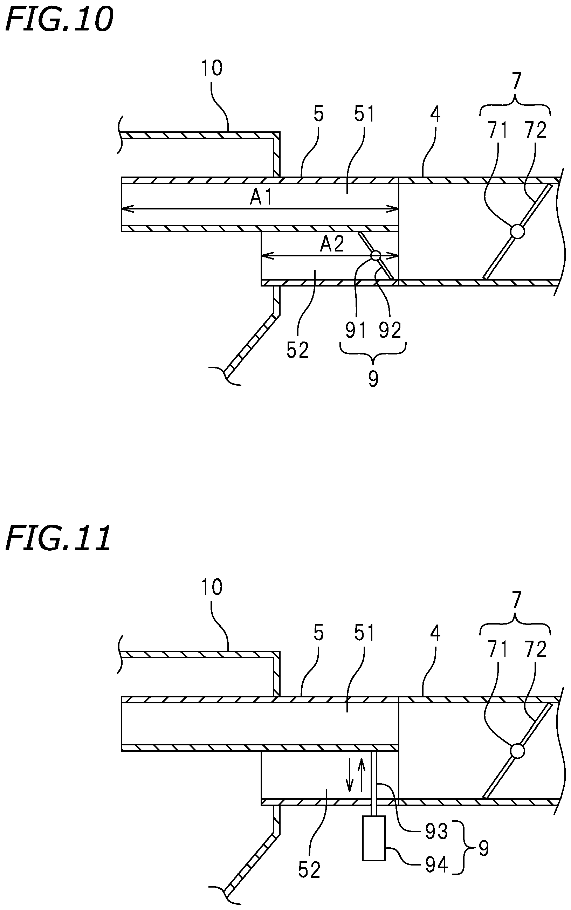

In the preferred embodiment, the channel length A1 of the first passage 51 and the channel length A2 of the second passage 52 are equal, but may be different. For example, as illustrated in FIG. 10, the channel length A1 of the first passage 51 may be larger than the channel length A2 of the second passage 52.

In the preferred embodiment, the shut-off valve 9 is a butterfly valve including the valve shaft 91 and the valve body 92. However, the shut-off valve 9 only needs to be a valve capable of opening and closing the second passage 52, and is not limited to a specific structure. For example, as illustrated in FIG. 11, the shut-off valve 9 may be a shutter-type valve including a valve body 93 and a solenoid 94 coupled to the valve body 93.

In the preferred embodiment, the channel length A2 of the second passage 52 is larger than the channel length B between the downstream end 8a of the partition of the intake passage 6 and the valve shaft 71 of the throttle valve 7, but the channel length A2 may be less than or equal to the channel length B.

In the preferred embodiment, the total channel length A1+A2 of the first passage 51 and the second passage 52 is larger than the channel length D of the portion of the intake passage 6 except for the first passage 51 and the second passage 52, but the total channel length A1+A2 may be less than or equal to the channel length D.

In the preferred embodiment, the channel length A1 of the first passage 51 is greater than or equal to 0.3 times as large as the channel length D between the downstream end 8a of the partition of the intake passage 6 and the intake opening 2, but the channel length A1 may be less than 0.3 times as large as the channel length D.

In the preferred embodiment, the channel length A1 of the first passage 51 is larger than the channel length E of the throttle body 4, but the channel length A1 may be less than or equal to the channel length E of the throttle body 4.

The channel length B between the downstream end 8a of the partition of the intake passage 6 and the valve shaft 71 of the throttle valve 7 may be less than the inner diameter 4d of the throttle body 4, or may be larger than three times as large as the inner diameter 4d.

The vehicle on which the engine 20 is mounted is not limited to a motorcycle . The engine 20 may be mounted on a straddled vehicle except for the motorcycle. The straddled vehicle herein refers to a vehicle on which a rider is astride. The engine 20 may be mounted in a vehicle except for the straddled vehicle.

### DESCRIPTION OF REFERENCE CHARACTERS

- 1: inlet
- 2: intake opening
- 3: intake port
- 4: throttle body
- 5: intake pipe
- 5A: outer pipe
- 5B: inner pipe (partition)
- 6: intake passage
- 7: throttle valve
- 9: shut-off valve
- 10: air cleaner
- 11: cylinder head
- 12: injector
- 13: injection port
- 20: internal combustion engine
- 41: rotation speed sensor
- 42: load detector
- 43: controller
- 51: first passage
- 52: second passage
- 71: valve shaft
- 72: valve body

## Claims

1. An internal combustion engine (20) comprising:
an intake passage (6) having an inlet (1) and an intake opening (2), and extending from the inlet (1) to the intake opening (2), the inlet (1) being configured to introduce air, the intake opening (2) being open to a combustion chamber (27);
a throttle valve (7) having a rotatable valve shaft (71) and a valve body (72) disposed on the valve shaft (71), the throttle valve (7) being disposed inside the intake passage (6);
a partition (5B) disposed upstream of the throttle valve (7) of the intake passage (6), the partition (5B) dividing at least a portion of the intake passage (6) upstream of the throttle valve (7) into a first passage (51) and a second passage (52), the first passage (51) and the second passage (52) being parallel to each other;
a shut-off valve (9) disposed inside the second passage (52), the shut-off valve (9) being configured to open and close the second passage (52),
an air cleaner (10);
an intake pipe (5) having the inlet (1) and connected to the air cleaner (10);
a throttle body (4) housing the throttle valve (7) and connected to the intake pipe (5); and
a cylinder head (11) having the intake opening (2) and an intake port (3) located upstream of the intake opening (2), the throttle body (4) being attached to the cylinder head (11),
an injector (12) having an injection port (13) from which fuel is injected, wherein
the intake passage (6) includes the intake port (3), the throttle body (4), and the intake pipe (5), and
at least a portion of the partition (5B) is disposed inside the intake pipe (5),
**characterized in that**
the first passage (51) has a channel length (A1) larger than a channel length (B) between a downstream end (8a) of the partition (5B) of the intake passage (6) and
the valve shaft (71) of the throttle valve (7), and
the injector (12) being attached to the throttle body (4), wherein
the injection port (13) is located at an opposite side to a center line (C2) of the second passage (52) with respect to a center line (C4) of the throttle body (4) when seen from a downstream side of the throttle body (4).

2. The internal combustion engine (20) according to claim 1, **characterized in that** the second passage (52) has a channel length (A2) larger than the channel length (B) between the downstream end (8a) of the partition (5B) of the intake passage (6) and the valve shaft (71) of the throttle valve (7).

3. The internal combustion engine (20) according to claim 1 or 2, **characterized in that** a total channel length (A1+A2) of the first passage (51) and the second passage (52) is larger than a channel length (D) of a portion of the intake passage (6) except for the first passage (51) and the second passage (52).

4. The internal combustion engine (20) according to any one of claims 1 to 3, **characterized in that** the channel length (A1) of the first passage (51) and the channel length (A2) of the second passage (52) are equal.

5. The internal combustion engine (20) according to any one of claims 1 to 4, **characterized in that** the channel length (A1) of the first passage (51) is greater than or equal to 0.3 times as large as the channel length (D) between the downstream end (8b) of the partition (5B) of the intake passage (6) and the intake opening (2).

6. The internal combustion engine (20) according to any one of claims 1 to 5, **characterized in that** the channel length (A1) of the first passage (51) is larger than a channel length (E) of the throttle body (4).

7. The internal combustion engine (20) according to any one of claims 1 to 6, **characterized in that** the channel length (B) between the downstream end (8a) of the partition (5B) of the intake passage (6) and the valve shaft (71) of the throttle valve (7) is one to three times as large as an inner diameter (4d) of the throttle body (4).

8. The internal combustion engine (20) according to any one of claims 1 to 7, **characterized in that** the downstream end (8a) of the partition (5B) is located outside the throttle body (4).

9. The internal combustion engine (20) according to any one of claims 1 to 8, **characterized in that** wherein the downstream end (8a) of the partition (5B) is located inside the throttle body (4).

10. The internal combustion engine (20) according to any one of claims 1 to 9, **characterized in that**
the intake pipe (5) includes an outer pipe (5A) and an inner pipe (5B) disposed inside the outer pipe (5A),
the partition is constituted by at least a portion of the inner pipe (5B),
the first passage (51) is disposed inside the outer pipe (5A) and outside the inner pipe (5B), and
the second passage (52) is disposed inside the inner pipe (5B).

11. The internal combustion engine (20) according to claim 10, **characterized in that** each of the outer pipe (5A) and the inner pipe (5B) is a circular pipe.

12. The internal combustion engine (20) according to any one of claims 1 to 11, **characterized by:**
a rotation speed sensor (41) configured to detect a rotation speed of the internal combustion engine (20); and
a controller (43) configured to close the shut-off valve (9) if the rotation speed detected by the rotation speed sensor (41) is less than a threshold and to open the shut-off valve (9) if the rotation speed is greater than or equal to the threshold.

13. The internal combustion engine (20) according to any one of claims 1 to 11, **characterized by:**
a rotation speed sensor (41) configured to detect a rotation speed of the internal combustion engine (20); and
a load detector (42) configured to detect a load of the internal combustion engine (20); and
a controller (43) configured to close the shut-off valve (9) if the rotation speed detected by the rotation speed sensor (41) is less than a threshold and to open the shut-off valve (9) if the rotation speed is greater than or equal to the threshold, the controller (43) being configured to change a setting of the threshold based on the load detected by the load detector (42).

## Patentansprüche

1. Ein Motor mit innerer Verbrennung (20), der umfasst
einen Einlassdurchgang (6), der einen Einlass (1) und eine Einlassöffnung (2) hat, und sich von dem Einlass (1) zu der Einlassöffnung (2) erstreckt, der Einlass (1) ist konfiguriert, so dass er Luft einführt, die Einlassöffnung (2) ist einer Verbrennungskammer (27) hin offen;
ein Drosselventil (7), das eine drehbaren Ventilwelle (71) und einen Ventilkörper (72) hat, der auf der Ventilwelle (71) angeordnet ist, das Drosselventil (7) ist innerhalb des Einlassdurchgangs (6) angeordnet;
eine Unterteilung (5B), die stromaufwärts des Drosselventils (7) des Einlassdurchgang (6) angeordnet ist, die Unterteilung (5B) teilt zumindest einen Teil des Einlassdurchgang (6) stromaufwärts des Drosselventils (7) in einen ersten Durchgang (51) und einen zweiten Durchgang (52), der erste Durchgang (51) und der zweite Durchgang (52) sind parallel zueinander;
ein Absperrventil (9), das innerhalb des zweiten Durchgangs (52) angeordnet ist, das Absperrventil (9) ist konfiguriert ist, so dass es den zweiten Durchgang (52) öffnet und schließt,
einen Luftfilter (10);
ein Einlassrohr (5), das den Einlass (1) hat und mit dem Luftfilter (10) verbunden ist; einen Drosselkörper (4), der die Drosselklappe (7) aufnimmt und mit dem Einlassrohr (5) verbunden ist; und
einen Zylinderkopf (11), der die Einlassöffnung (2) hat, und einem Einlassanschluss (3), der stromaufwärts der Einlassöffnung (2) angeordnet ist, der Drosselkörper (4) ist an dem Zylinderkopf (11) angebracht,
eine Einspritzdüse (12), die eine Einspritzöffnung (13) hat, aus der Kraftstoff eingespritzt wird, wobei
der Einlassdurchgang (6) den Einlassanschluss (3), dem Drosselkörper (4) und das Einlassrohr (5) enthält, und
zumindest ein Abschnitt der Unterteilung (5B) im Inneren des Einlassrohrs (5) angeordnet ist, **dadurch gekennzeichnet, dass**
der erste Durchgang (51) eine Kanallänge (A1) hat, die größer ist als eine Kanallänge (B) zwischen einem stromabwärtigen Ende (8a) der Unterteilung (5B) des Einlassdurchgang (6) und der Ventilwelle (71) des Drosselventils (7), und
die Einspritzdüse (12) an dem Drosselkörper (4) angebracht ist, wobei
die Einspritzöffnung (13) sich auf einer Seite befindet, die einer Mittellinie (C2) des zweiten Durchgangs (52) in Bezug auf eine Mittellinie (C4) des Drosselkörpers (4) gegenüberliegt, wenn von einer stromabwärts gelegenen Seite des Drosselkörpers (4) aus betrachtet.

2. Der Motor mit innerer Verbrennung (20) gemäß Anspruch 1, **dadurch gekennzeichnet, dass** der zweite Durchgang (52) eine Kanallänge (A2) aufweist, die größer ist als die Kanallänge (B) zwischen dem stromabwärtigen Ende (8a) der Unterteilung (5B) des Einlassdurchgang (6) und der Ventilwelle (71) des Drosselventils (7).

3. Der Motor mit innerer Verbrennung (20) gemäß Anspruch 1 oder 2, **dadurch gekennzeichnet, dass** eine Gesamtkanallänge (A1+A2) des ersten Durchgangs (51) und des zweiten Durchgangs (52) größer ist als eine Kanallänge (D) eines Abschnitts des Einlassdurchgang (6) mit Ausnahme des ersten Durchgangs (51) und des zweiten Durchgangs (52).

4. Der Motor mit innerer Verbrennung (20) gemäß irgendeinem der Ansprüche 1 bis 3, **dadurch gekennzeichnet, dass** die Kanallänge (A1) des ersten Durchgangs (51) und die Kanallänge (A2) des zweiten Durchgangs (52) gleich sind.

5. Der Motor mit innerer Verbrennung (20) gemäß irgendeinem der Ansprüche 1 bis 4, **dadurch gekennzeichnet, dass** die Kanallänge (A1) des ersten Durchgangs (51) größer oder gleich 0,3 mal so groß ist wie die Kanallänge (D) zwischen dem stromabwärtigen Ende (8b) der Unterteilung (5B) des Einlassdurchgangs (6) und der Einlassöffnung (2).

6. Der Motor mit innerer Verbrennung (20) gemäß irgendeinem der Ansprüche 1 bis 5, **dadurch gekennzeichnet, dass** die Kanallänge (A1) des ersten Durchgangs (51) größer ist als eine Kanallänge (E) des Drosselkörpers (4).

7. Der Motor mit innerer Verbrennung (20) gemäß irgendeinem der Ansprüche 1 bis 6, **dadurch gekennzeichnet, dass** die Kanallänge (B) zwischen dem stromabwärtigen Ende (8a) der Unterteilung (5B) des Einlassdurchgangs (6) und der Ventilwelle (71) des Drosselventils (7) ein bis dreimal so groß ist wie ein Innendurchmesser (4d) des Drosselkörpers (4).

8. Der Motor mit innerer Verbrennung (20) gemäß irgendeinem der Ansprüche 1 bis 7, **dadurch gekennzeichnet, dass** das stromabwärtige Ende (8a) der Unterteilung (5B) außerhalb des Drosselkörpers (4) angeordnet ist.

9. Der Motor mit innerer Verbrennung (20) gemäß irgendeinem der Ansprüche 1 bis 8, **dadurch gekennzeichnet, dass** das stromabwärtige Ende (8a) der Unterteilung (5B) innerhalb des Drosselkörpers (4) angeordnet ist.

10. Der Motor mit innerer Verbrennung (20) gemäß irgendeinem der Ansprüche 1 bis 9, **dadurch gekennzeichnet, dass**
das Einlassrohr (5) ein Außenrohr (5A) und ein Innenrohr (5B), das innerhalb des Außenrohrs (5A) angeordnet ist, beinhaltet,
die Unterteilung aus mindestens einem Abschnitt des Innenrohrs (5B) besteht,
der erste Durchgang (51) innerhalb des Außenrohrs (5A) und außerhalb des Innenrohrs (5B) angeordnet ist, und
der zweite Durchgang (52) im Inneren des Innenrohrs (5B) angeordnet ist.

11. Der Motor mit innerer Verbrennung (20) gemäß Anspruch 10, **dadurch gekennzeichnet, dass** sowohl das Außenrohr (5A) als auch das Innenrohr (5B) ein kreisförmiges Rohr ist.

12. der Motor mit innerer Verbrennung (20) gemäß irgendeinem der Ansprüche 1 bis 11, **gekennzeichnet durch:**
einen Drehzahlsensor (41), der konfiguriert ist, so dass er eine Drehzahl des Motors mit innerer Verbrennung (20) erfasst; und
eine Steuerung (43), die konfiguriert ist, so dass sie das Absperrventil (9) schließt, wenn die Drehzahl, die von dem Drehzahlsensor (41) erfasst ist, kleiner als ein Schwellenwert ist, und das Absperrventil (9) öffnet, wenn die Drehzahl größer oder gleich dem Schwellenwert ist.

13. Der Motor mit innerer Verbrennung (20) gemäß irgendeinem der Ansprüche 1 bis 11, **gekennzeichnet durch:**
einen Drehzahlsensor (41), der konfiguriert ist, so dass er eine Drehzahl des Motors mit innerer Verbrennung (20) erfasst; und
einen Lastdetektor (42), der konfiguriert ist, so dass er eine Last des Motors mit innerer Verbrennung (20) erfasst; und
eine Steuerung (43), die konfiguriert ist, so dass sie das Absperrventil (9) schließt, wenn die Drehzahl, die von dem Drehzahlsensor (41) erfasst ist, unter einem Schwellenwert liegt, und das Absperrventil (9) öffnet, wenn die Drehzahl größer oder gleich dem Schwellenwert ist, die Steuerung (43) ist konfiguriert, so dass sie eine Einstellung des Schwellenwerts auf der Grundlage der Last, die von dem Lastdetektor (42) erfasst ist, ändert.

## Revendications

1. Moteur à combustion interne (20) comprenant :
un passage d'admission (6) comportant une ouverture d'entrée (1) et une lumière d'admission (2), et se déployant depuis l'ouverture d'entrée (1) jusqu'à la lumière d'admission (2), l'ouverture d'entrée (1) étant configurée pour introduire de l'air, la lumière d'admission (2) étant ouverte sur une chambre de combustion (27),
un papillon des gaz (7) comportant un axe de papillon (71) rotatif et un corps de papillon (72) placé sur l'axe de papillon (71), le papillon des gaz (7) étant placé à l'intérieur du passage d'admission (6),
une séparation (5B) placée en amont du papillon des gaz (7) du passage d'admission (6), la séparation (5B) divisant au moins une partie du passage d'admission (6) en amont du papillon des gaz (7) en un premier passage (51) et un second passage (52), le premier passage (51) et le second passage (52) étant parallèles l'un à l'autre,
une vanne d'arrêt (9) placée à l'intérieur du second passage (52), la vanne d'arrêt (9) étant configurée pour ouvrir et fermer le second passage (52),
un filtre à air (10),
un conduit d'admission (5) qui comporte l'ouverture d'entrée (1) et qui est raccordé au filtre à air (10),
un corps de papillon (4) logeant le papillon des gaz (7) et relié au conduit d'admission (5), et
une culasse (11) qui comporte la lumière d'admission (2) et un orifice d'admission (3) situé en amont de la lumière d'admission (2), le corps de papillon (4) étant fixé à la culasse (11),
un injecteur (12) comportant un orifice d'injection (13) d'où est injecté le carburant, dans lequel :
le passage d'admission (6) inclut l'orifice d'admission (3), le corps de papillon (4) et le conduit d'admission (5), et
au moins une partie de la séparation (5B) est placée à l'intérieur du conduit d'admission (5),
**caractérisé en ce que** :
le premier passage (51) présente une longueur de canal (A1) plus grande que la longueur de canal (B) comprise entre l'extrémité aval (8a) de la séparation (5B) du passage d'émission (6) et l'axe de papillon (71) du papillon des gaz (7), et
l'injecteur (12) est fixé au corps de papillon (4), où
l'orifice d'injection (13) est situé du côté opposé de l'axe central (C2) du second passage (52) par rapport à l'axe central (C4) du corps de papillon (4) lorsqu'il est vu depuis le côté aval du corps de papillon (4).

2. Moteur à combustion interne (20) selon la revendication 1, **caractérisé en ce que** le second passage (52) présente une longueur de canal (A2) plus grande que la longueur de canal (B) comprise entre l'extrémité aval (8a) de la séparation (5B) du passage d'admission (6) et l'axe de papillon (71) du papillon des gaz (7).

3. Moteur à combustion interne (20) selon la revendication 1 ou la revendication 2, **caractérisé en ce que** la longueur totale des canaux (A1 + A2) du premier passage (51) est supérieure ou égale à 0,3 fois la longueur de canal (D) comprise entre l'extrémité aval (8b) de la séparation (5B) du passage d'admission (6) et la lumière d'admission (2) .

4. Moteur à combustion interne (20) selon l'une quelconque des revendications 1 à 3, **caractérisé en ce que** la longueur de canal (A1) du premier passage (51) et la longueur de canal (A2) du second passage (52) sont égales.

5. Moteur à combustion interne (20) selon l'une quelconque des revendications 1 à 4, **caractérisé en ce que** la longueur de canal (A1) du premier passage (51) est supérieur ou égale à 0,3 fois la longueur de canal (D) comprise entre l'extrémité aval (8b) de la séparation (5B) du passage d'admission (6) et la lumière d'admission (2)

6. Moteur à combustion interne (20) selon l'une quelconque des revendications 1 à 5, **caractérisé en ce que** la longueur de canal (A1) du premier passage (51) est plus grande que la longueur de canal (E) du corps de papillon (4) .

7. Moteur à combustion interne (20) selon l'une quelconque des revendications 1 à 6, **caractérisé en ce que** la longueur de canal (B) comprise entre l'extrémité aval (8a) de la séparation (5B) du passage d'admission (6) et l'axe de papillon (71) du papillon des gaz (7) est de une à trois fois aussi grande que le diamètre interne (4d) du corps de papillon (4).

8. Moteur à combustion interne (20) selon l'une quelconque des revendications 1 à 7, **caractérisé en ce que** l'extrémité aval (8a) de la séparation (5B) est située à l'extérieur du corps de papillon (4).

9. Moteur à combustion interne (20) selon l'une quelconque des revendications 1 à 8, **caractérisé en ce que** l'extrémité aval (8a) de la séparation (5B) est située à l'intérieur du corps de papillon (4)

10. Moteur à combustion interne (20) selon l'une quelconque des revendications 1 à 9,
**caractérisé en ce que** :
le conduit d'admission (5) inclut un conduit externe (5A) et un conduit interne (5B) disposé à l'intérieur du conduit externe (5A),
la séparation est constituée par au moins une partie du conduit interne (5B),
le premier passage (51) est placé à l'intérieur du conduit externe (5A) et à l'extérieur du conduit interne (5B), et
le second passage (52) est placé à l'intérieur du conduit interne (5B).

11. Moteur à combustion interne (20) selon la revendication 10, **caractérisé en ce que** chacun du conduit externe (5A) et du conduit interne (5B) est un conduit circulaire.

12. Moteur à combustion interne (20) selon l'une quelconque des revendications 1 à 11,
**caractérisé par** :
un capteur de régime de rotation (41) configuré pour détecter le régime de rotation du moteur à combustion interne (20), et
un contrôleur (43) configuré pour fermer la vanne d'arrêt (9) si le régime de rotation détecté par le capteur de régime de rotation (41) est inférieur à un seuil, et pour ouvrir la vanne d'arrêt (9) si le régime de rotation est supérieur ou égal au seuil.

13. Moteur à combustion interne (20) selon l'une quelconque des revendications 1 à 11,
**caractérisé par** :
un capteur de régime de rotation (41) configuré pour détecter le régime de rotation du moteur à combustion interne (20), et
un détecteur de charge (42) configuré pour détecter la charge du moteur à combustion interne (20), et
un contrôleur (43) configuré pour fermer la vanne d'arrêt (9) si le régime de rotation détecté par le capteur de régime de rotation (41) est inférieur à un seuil, et pour ouvrir la vanne d'arrêt (9) si le régime de rotation est supérieur ou égal au seuil, le contrôleur (43) étant configuré pour modifier un réglage du seuil sur la base de la charge détectée par le détecteur de charge (42).
